# EUROPEAN PATENT SPECIFICATION

(11) **EP 3 771 076 B1**
(45) Date of publication and mention of the grant of the patent: **22.03.2023**
(21) Application number: 19425055.1
(22) Date of filing: 23.07.2019
(51) Int. Cl.: H02K 41/035

(54) **PORTABLE DEVICE AND METHOD FOR CLEANING A GENERATOR CONDUCTOR, IN PARTICULAR A TURBO-GENERATOR CONDUCTOR**
TRAGBARE VORRICHTUNG UND VERFAHREN ZUR REINIGUNG EINES GENERATORLEITERS, INSBESONDERE EINES TURBOGENERATORLEITERS
DISPOSITIF PORTABLE ET PROCÉDÉ DE NETTOYAGE D'UN CONDUCTEUR DE GÉNÉRATEUR, EN PARTICULIER UN CONDUCTEUR DE TURBOGÉNÉRATEUR

(43) Date of publication of application: 27.01.2021
(73) Proprietor: ANSALDO ENERGIA S.p.A., 16152 Genova (IT)
(72) Inventor: Vercelli, Giorgio, 16152 Genova (IT); Penzo, Luca, 16152 Genova (IT); Vallarino, Domenico, 16152 Genova (IT)
(74) Representative: Martini, Gabriele

(56) References cited:
- WO-A1-2009/020763
- CN-U- 204 271 529
- US-A- 3 188 674
- US-A- 5 269 104

## Description

### Field of the Invention

The present invention relates to the technical field of the generators, i.e. devices configured for converting an incoming mechanical energy into an electrical energy. In particular, the present invention relates to the field of the service for generators, i.e. the periodic inspection activities carried out in order to check the integrity of the components forming the generators or the repairing activities carried out in order to repair some damaged components for restoring the assembly. More in detail, the service activity related to the present invention refers to operations to be performed for restoring a generator connection in case of a damage occurred at a generator connection itself. With the term "generator connection" we mean the coupling between a stator bar end and a conductor configured for carrying current outside the generator. Even if the present invention has been introduced as a service activity to be performed for restoring a damaged generator connection, the service activity of the present invention may be performed also before that a damage occurs for providing the generator with new connections. In view of the above preliminary considerations related to the technical field of the present invention, the following description will refer to a portable device and to a method for cleaning a generator conductor wherein the term "cleaning" means "preparing" the conductor for a new connection. In the following, the above mentioned generator will be described as a turbo-generator, i.e. a generator of a turbine assembly, because in this kind of machine the service activity is very important and it has to be periodically performed. However, the present invention can be applied also in other kind of generators. In other words, the described implementation of the present invention in the field of a turbo-set generator does not limit the scope of protection of the invention itself.

### Description of prior art

As known, an electrical generator (also called alternator) is an assembly configured for converting an incoming energy into an electrical energy as the output. The present invention refers in particular to a turbo generator wherein the incoming energy is a mechanical energy in form a rotating rotor driven by a turbine. In turn, as know, in the case of a gas turbine, the turbine is driven by an expanding hot gas flow generated in a gas turbine assembly comprising a compressor unit, a combustor unit and the turbine itself; in the case of a steam turbine, the turbine is driven by an expanding high temperature and high pressure water steam in the turbine assembly, that is typically composed of a high pressure, a medium pressure and a low pressure section. In view of the above, an electrical generator comprises a rotating part in form of a sleeve made integral with the rotating rotor and a statoric part that is a fixed structure arranged outside around the rotating part. Also the statoric part is shaped as a sleeve and an airgap is present between the inner rotating part rotor and the outer statoric part of the generator. Therefore, the statoric part is shaped as a hollow cylindrical body wherein the inner cylindrical surface is facing the rotating rotor. The rotating part supports a plurality of magnetic elements in order to generate a rotating magnetic field. The inner surface of the statoric part, i.e. the surface facing the rotating part of the generator, is provided with a plurality of axial grooves (the term axial refers to the rotor axis) wherein each groove defines a recessed seat for housing a stator bar as part of relative electric windings. According to the Faraday's Law, the rotating magnetic field develops an electromotive force in the electric windings of the statoric part. The front portion of the statoric part is called generator end winding and comprises a plurality of stator bar ends configured to be coupled with corresponding conductors for carrying out the generated electric current/voltage. In particular, the present invention refers to a generator connection wherein each conductor is realized in form of a cylindrical body made of a conductor material (as copper). In view of this shape of the conductor, currently each stator bar end is provided with a joint (also made of a conductor material) comprising a base coupled to a stator bar end and a head substantially concave-shaped configured to be coupled with the outer surface of the cylindrical conductor. According to this prior art practice the connection between the joint and the cylindrical conductor is performed according to the following steps. Preliminary the cylindrical conductor is forced against the concave head of the joint and then the joint is brazed to the conductor.

This prior art connection involves some drawbacks. In particular, this connection is prone to mechanical failure due to the weakness of the joint layout.

In order to avoid this problem, the Applicant developed an alternative joint wherein no room for mechanical stresses leading to damages are present. In particular, this alternative joint comprises a base in form of two plates configured to be coupled with the stator bar end and a head in form of a cylindrical seat configured for housing the end of the cylindrical conductor. In this way, at the connection the cylindrical conductor is fully covered by the cylindrical seat.

In order to replace the old joint with a new joint (in case of a damage or only as improving service activity) it is therefore necessary to detaching or releasing the existing connection and performing a new connection by using the alternative joint foregoing described. Due to the cylindrical/prismatic connection between the alternative joint and the conductor, the outer surface of the conductor (at least the portion to be coupled with the joint) has to be "cleaned" (i.e. to improve the cylindricity and/or roughness of the conductor outer surface to be brazed to the new joint) for being suitable for the connection. In particular, due to the coupling steps foregoing described and performed for coupling the conductor to the concave-head of the old joint, on the outer surface of the conductor is present brazing material to be removed (residual of unbrazing step accomplished to detaching or releasing the existing connection). Moreover, the outer surface of the conductor discloses some portion with local deformations (due to the step of jigging the conductor to form the conductor for reaching out to the joint position round the end winding at the phase breaks).

In order to clean the conductor outer surface (at least the part of conductor outer surface to be brazed to the new joint) it is necessary to remove some brazed material of the previous connection from the outer surface of the conductor, this task can be easily accomplished by using a grinding device.

The solution according to the prior art practice, that is simple and straightforward for those skilled in the art, for preparing (grinding) the conductor for the new joint is the complete removal of the conductor from the generator in order to move the conductor away from the generator to a working station where the outer conductor surface may be worked by using common grinding tools. Indeed, to grind an external cylindrical surface today it is necessary to perform this activity by hand (with abrasive paper or with a motorized tool). However, in this case only a random roughness value can be obtained. This solution is so expensive in terms of costs/time that usually is today preferable to replace the old conductor with a new conductor instead of restoring the old conductor

Automatic grinding devices are known. However, these automatic devices are configured for acting on the internal diameters and not on the outer surface as required by the present invention.

WO2009020763 discloses a hand-held electrical conductor cleaning apparatus including a frame having a handle section and a tube section; an abrasive member movably mounted in the tube section; a motor adapted to move the abrasive member inside the tube section; a battery connected to the motor; and a user control for actuating the motor.

CN204271529U discloses a wire rust-removing brush composed of a housing body, a handle, and brush strips.

### Disclosure of the invention

Accordingly, a primary object of the present invention is to provide a portable device configured for being used onsite ("in-situ") and for cleaning the outer surface of an existing cylindrical conductor of a generator (in particular a turbo-generator) for being coupled to a joint having a cylindrical seat. With the term "portable" we mean a device that can be used between the generator components without requiring the conductor removal, i.e. a device having a size as small as possible. In particular, the present invention refers to a portable grinding device configured for grinding the outer surface of the cylindrical conductor in order to cleaning the surface because of pre-existing residual brazing material and to prepare the conductor to be housed (and brazed) in a new cylindrical joint seat.

Beside the above main scope of the invention, there are also some addition peculiar problems solved by the invention; namely:
- a very narrow working space;
- the part to be cleaned (grinded) is attached to the generator and could not be detached and mounted easily, unless costly and time consuming disassembly is envisaged;
- the cleaning process requires some sort of power (pneumatic/electrical/hydraulic) which could not be just delivered by hand.

Before entering into the mechanical details of the portable grinded device, the present invention may also be defined as an alternative method for cleaning the outer surface of the generator conductor. Indeed, actually the prior art practice does not suggest to perform this grinding step onsite and inside the generator in order to prepare the conductor to be housed and brazed in joint cylindrical seat.

Therefore, the present invention also provides a method for cleaning the outer surface of a conductor of a generator, in particular a turbo-generator, wherein the conductor is a cylindrical conductor coupled to a first stator bar joint of the a generator. This method comprises the steps of:
a) providing a portable grinding device (as will be described in the following);
b) releasing the coupling between the first stator bar joint and the conductor; usually the first stator bar joint comprises a conductor receiving seat concave shaped, whilst the existing coupling is realized by brazing the connection while the conductor is somewhat forced against the seat;
c) coupling the portable grinding device to the conductor, wherein the portable grinding device has a very small size so the conductor can be still coupled to the generator;
d) grinding the conductor (i.e. part of the end outer surface of the conductor) by activating the portable grinding device.

Preferably, the step b) is performed by induction heating.

Since the scope of the method is cleaning end outer surface of the conductor i.e. the putting the conductor in a condition (smoot and cylindrical end outer surface) to be suitable for being housed and brazed in a new joint cylindrical seat, the method comprises also the steps of:
e) replacing the first or existing stator bar joint with a second or new stator bar joint having a cylindrical seat configured (i.e. having a suitable inner diameter) for housing the grinded part of the conductor;
f) coupling the grinded conductor to the cylindrical seat of the second stator bar joint.

Since according the invention the end of the conductor is grinded while the conductor is still connected to the generator (i.e. the downstream part of the generator), the conductor is fixed whereas the portable grinding device is provided with a rotating grinded tool. Therefore, during the step d) the conductor is fixed and the grinded tool is rotating around the outer surface of the conductor.

Thus, the invention involves a reliable and efficient method performed by using a handy (portable and able to be used onboard the stator) rotating system for grinding the generator's cylindrical connectors. Please be noted that in a traditional grinding process the surface to be grinded is the inner surface of the cylindrical connector. On the contrary, in the present invention the surface to be grinded is the outer surface of a cylindrical conductor.

As foregoing cited, the Applicant developed a new portable device suitable for performing the method of the invention, i.e. a device configured for grinding the conductor when the conductor is fixed to the generator and configured for being used onboard the stator. Therefore, the portable device according to the main definition of the invention comprises:
- a handle assembly configured for being maneuvered by a user;
- a grinding tool (supported by the handle) configured for rotating around (and grinding) the end outer surface of the conductor while the conductor is fixed and supported by the generator (the downstream part of the generator).

Preferably, the device comprises a motor for driving the rotation of the grinding tool. For instance an adjustable pneumatic motor that can be controlled by the handle.

Preferably, the device comprises a rotating bowl supporting the grinding tool and configured for receiving the conductor end to be grinded. This bowl is driven in rotation by the motor connected to the handle assembly and the grinding tool supported by the bowl comprises a plurality of abrasive elements configured for grinding the end outer surface of the conductor.

Preferably, the abrasive elements are removable for allowing the arrangement of a new or different abrasive element.

Preferably, each abrasive element is pressed against the outer conductor by a pressing element. In turn each pressing element is pushed towards the conductor by a spring adjustable element.

Preferably the portion of each pressing element configured for be pressed against the conductor is cylindrical shape for matching the conductor cylindrical surface and the abrasive elements are realized in form abrasive papers between the pressing elements and the conductor.

It is to be understood that both the foregoing general description and the following detailed description are exemplary, and are intended to provide further explanation of the invention as claimed. Other advantages and features of the invention will be apparent from the following description, drawings and claims.

The features of the invention believed to be novel are set forth with particularity in the appended claims.

### Brief description of drawings

Further benefits and advantages of the present invention will become apparent after a careful reading of the detailed description with appropriate reference to the accompanying drawings.

The invention itself, however, may be best understood by reference to the following detailed description of the invention, which describes an exemplary embodiment of the invention, taken in conjunction with the accompanying drawings, in which:
- figure 1 is a schematic view of a gas turbine assembly for power plants;
- figure 2 is a schematic view of a statoric part of a generator;
- figure 3 is a schematic enlarged view of the portion labeled as III in figure 2 showing an existing generator connection;
- figure 4 is a schematic view of an alternative generator connection wherein before the coupling the existing conductor has to be grinded;
- figure 5 is a schematic view of an embodiment of a portable grinding device according to present invention suitable for cleaning the end outer surface of the conductor fixed to the generator;
- figures 6 and 7 are schematic views of components of the portable grinding device of figure 5;
- figure 8 is a schematic view of the portable grinding device of figure 5 coupled with a generator conductor.

### Detailed description of preferred embodiments of the invention

In cooperation with attached drawings, the technical contents and detailed description of the present invention are described thereinafter according to preferred embodiments, being not used to limit its executing scope. Any equivalent variation and modification made according to appended claims is all covered by the claims claimed by the present invention.

Reference will now be made to the drawing figures to describe the present invention in detail.

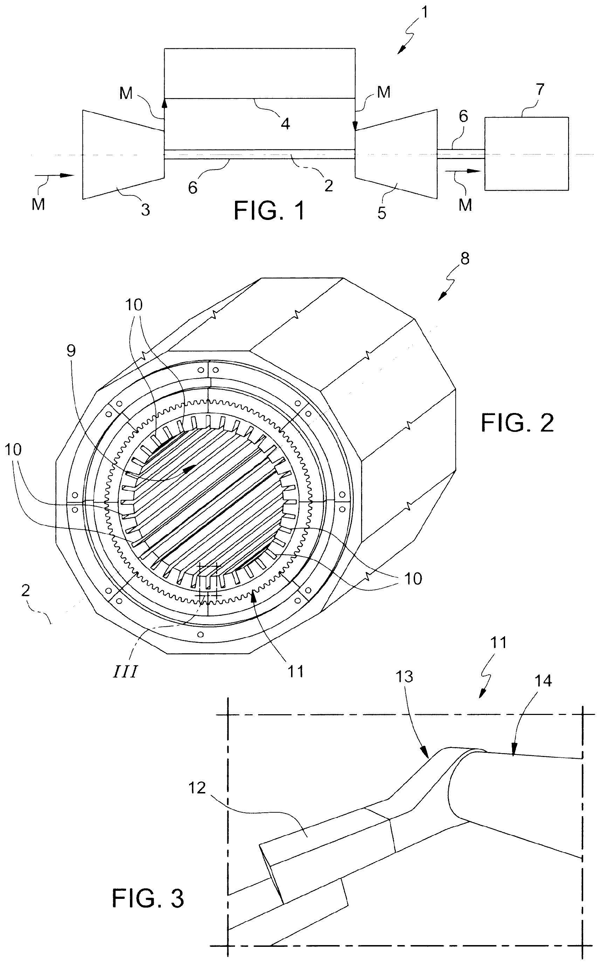

Reference is made to figure 1 which is a schematic view of a gas turbine assembly for power plants (in the following only gas turbine). Indeed, a gas turbine generator field is a non-limiting example of a possible application of the present invention. Figure 1 discloses a gas turbine 1 having a rotor 6 defining an axis 2 and comprising in series along the main flow M:
- a compressor unit 3,
- a combustor unit 4 wherein the compressed air is mixed with at least a fuel and this mixture is combusted to create a hot gas flow,
- a turbine unit 5 where the hot gas flow expands performing rotating work on the rotor 6.

According to figure 1, downstream the turbine 5 the rotor 6 works for driving the rotating part in a generator 7.

Reference is now made to figures 2 that is a schematic view of the statoric part 8 of the foregoing cited generator 7. In particular, figure 2 discloses a statoric part 8 in form of a hollow cylindrical structure along the axis 2 suitable for housing the rotating part (not shown in figure 2). As above described, the rotor may be the gas turbine rotor 6 of figure 1 and therefore the generator axis may be aligned or not with respect to gas turbine axis. Statoric part 8 of the generator 7 comprises an inner surface 9 facing the rotating part and wherein an airgap is provided between the rotating part and this inner surface 9. As disclosed in figure 2, the inner surface 9 is provided with a plurality of axial grooves or slots 10 parallel to the axis 2 and circumferentially spaced one from the other. Each groove 10 houses a stator bar defining electrical windings. As known (and according to the Faraday's Law), the rotating magnetic field generated by the rotating part develops an electromotive force (i.e. an electric energy) in the electric windings of the statoric part. In order to use this electric energy the front portion of the statoric part (also called generator end winding and labelled with the reference 11 in figure 2) comprises a plurality of stator bar ends coupled through joints with corresponding conductors in turn fixed to downstream parts of the generator.

Reference is now made to figure 3 that is a schematic enlarged view of the portion of generator end winding labelled with the reference III in figure 2. In particular, figure 3 discloses the existing connection present in the generator before the actuation of the present invention. According to the example of figure 3 the stator bar end 12 is coupled to a first joint 13 (also made of a conductor material) comprising a base coupled to a stator bar end 12 and a head substantially concave-shaped configured to be coupled with the outer surface of the cylindrical conductor 14. As described in the prior art chapter, the connection between this joint 13 and the cylindrical conductor 14 is performed according to the following steps. Preliminary the cylindrical conductor 14 is somewhat forced against the concave head of the joint 13 and then the joint 13 is brazed to the conductor 14. This prior art connection involves some drawbacks. In particular, this connection is prone to mechanical failure due to the weakness of the structure of the joint layout. In order to avoid this problem, the Applicant developed an alternative joint wherein no room for mechanical stresses leading to damages are present.

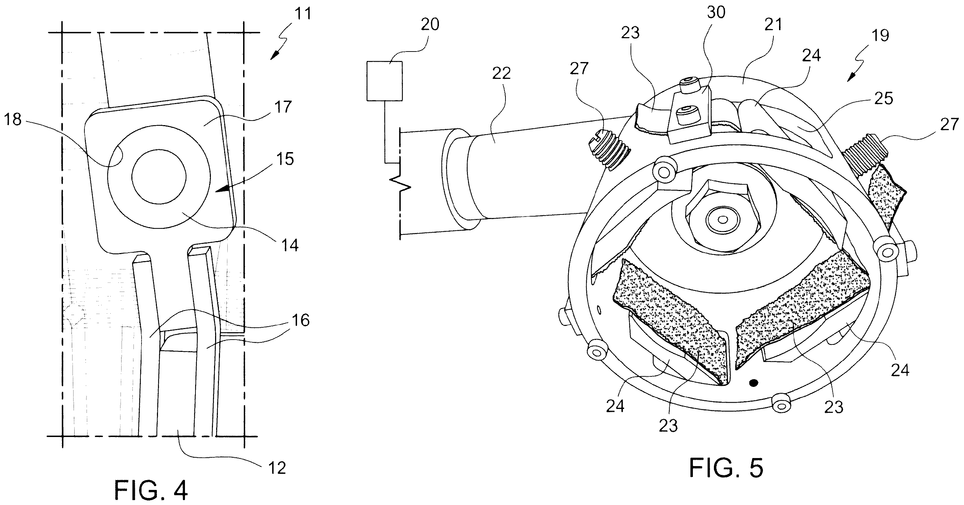

Reference is now made to figure 4 disclosing an alternative joint for connecting the stator bar end to the conductor. In particular, this alternative joint 15 comprises a base in form of two plates 16 configured to be coupled with the stator bar end 12 and a head 17 comprising a cylindrical seat 18 configured for housing the end of the cylindrical conductor 14. As disclosed in figure 4, in this way at the connection the cylindrical conductor 14 is fully embraced by the cylindrical seat 18 so as it achieves a pocket joint. In order to replace the old joint 13 (figure 3) with the new joint 15 of figure 4 (in case of a damage of the existing joint 13 or only as improving service activity) it is therefore necessary to detaching or releasing the existing connection and performing a new connection by using this alternative joint 15 foregoing described. Due to the cylindrical/prismatic connection between the alternative joint 15 and the conductor 14, the outer surface of the conductor 14 (at least the portion to be coupled with the joint 15) has to be cleaned for being suitable for the connection. Due to the coupling steps foregoing described and performed for coupling the conductor 14 to the existing concave-head of the old joint 13, the outer surface of the conductor 14 discloses brazed material (as traces of the previous connection) to be removed by using a grinding device. In view of the above, Applicant developed a new portable grinding device configured for being used between the generator components with the conductor released by the old joint 13 but still fixed to the downstream parts of the generator.

Reference is now made to figures 5-7 that disclose an embodiment of a portable grinding device according to the present invention. This portable grinding device 19 comprises (or is connectable to) a pneumatic (adjustable) motor 20 configured for driving in rotation a bowl 21 supporting a grinding tool or device and configured for housing the conductor end to be grinded. The portable grinding device 19 comprises a handle 22 and the motion is transmitted from the motor 20 to the bowl 21 passing inside the handle 22. According to this embodiment, the grinding tool comprises four (at least 3) abrasive papers 23 configured for grinding the conductor outer surface and pressed against the conductor outer surface by four pressing elements in form of tilting flaps 24 hinged to the bowl 21. In particular, the each tilting flap 24 is housed in a window 25 obtained in the bowl 21, each pressing element comprises a first end hinged in the window and a free end projecting inside the bowl and a second free end 26 comprises a cylindrical surface matching the conductor cylindrical surface. Each tilting flap 24 is pushed against the conductor cylindrical surface by an adjusting pushing element 27 realized in form a screw 28 passing the bowl 21 and having a spring spherical head 29 acting against the tilting flap 24. The abrasive papers 23 fixed in position by blocking plates 30 that can be removed for allowing the positioning of new abrasive papers 23.

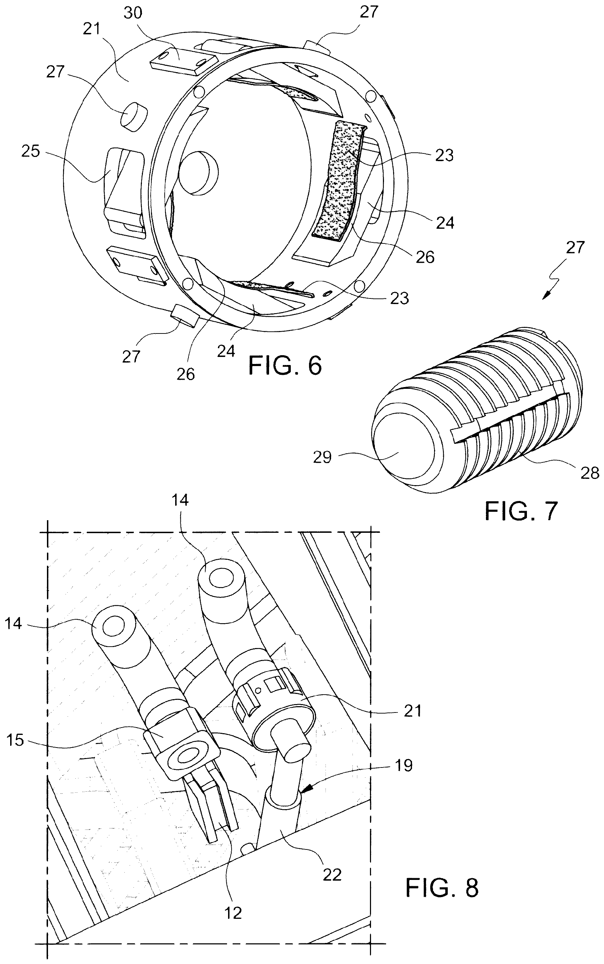

Finally, figure 8 discloses how the device 19 of figure 5 can be used for performing the method of the invention. As disclosed in figure 6 the device 19 has a size suitable for being used onboard the stator without requiring the conductor removal.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A method for cleaning the end outer surface of a generator conductor (7), in particular a turbo-generator conductor, wherein the conductor (7) is a cylindrical conductor (14) coupled to a first stator bar joint (13) of the a generator; the method comprising the steps of:
a) providing a portable device (19) provided with a grinding tool;
b) releasing the coupling between the first stator bar joint (13) and the conductor (14);
c) coupling the grinding device (19) to the conductor (14), the conductor being still coupled to the generator;
d) grinding the end outer surface of the conductor (14); **characterized in that** the method comprises also the steps of:
e) replacing the first stator bar joint (13) with a second stator bar joint (15) having a cylindrical seat (18) configured to be coupled with the grinded part of the conductor (14);
f) coupling the grinded conductor to the cylindrical seat (18) of the second stator bar joint (15).

2. Method as claimed in claim 1, wherein the existing coupling between the conductor (14) and the first stator bar joint (13) is realized by brazing; the step b) is performed by induction heating.

3. Method as claimed in claim 1, wherein the coupling between the grinded conductor and the second stator bar joint (15) is realized by brazing.

4. Method as claimed in any one of the foregoing claims, wherein the portable grinding device (19) is provided with a rotating grinded tool; during the step d) the conductor (14) is fixed and the grinded tool is rotating around the conductor.

5. A portable device (19) for cleaning the end outer surface of a generator conductor (14), in particular a turbo-generator conductor, the device having a size suitable for being used between the stator components and comprising:
- a handle assembly (22) configured for being maneuvered by a user;
- a grinding tool configured for rotating around the end outer surface of the conductor (14) while the conductor is fixed;
wherein the device comprises a rotating bowl (21) supporting the grinding tool and configured for housing the conductor end (14);
wherein the grinding tool comprises:
- a plurality of abrasive elements (23) configured for grinding the conductor outer surface (14);
- pressing elements (24) configured for pressing the abrasive elements (23) against the conductor (14) outer surface;
**characterized in that** the pressing elements (24) are housed in windows (25) obtained in the bowl (21), each pressing
element comprises a first end hinged in the window and a free end (26) projecting inside the bowl (21).

6. Device as claimed in claim 5, wherein the device comprises an adjustable pneumatic motor (20) for driving the grinding tool.

7. Device as claimed in claim 5, wherein the free end of the pressing elements (24) comprises a cylindrical surface matching the conductor cylindrical surface.

8. Device as claimed in claim 5 or 7, wherein the grinding tool comprises a plurality of adjusting (27) pushing elements configured for pushing the pressing elements (24) against the conductor cylindrical surface (14).

9. Device as claimed in claim 8, wherein each adjusting pushing elements are realized in form of screws (27) passing the bowl (21) and having sprung spherical heads (29) acting against the pressing elements.

10. Device as claimed in any one of the foregoing claim from 5 to 9, wherein the abrasive elements are realized in form abrasive papers (23) fixed in position by releasing blocking plates (30).

## Patentansprüche

1. Verfahren zum Reinigen der äußeren Endoberfläche eines Generatorleiters (7), insbesondere eines Turbogeneratorleiters, wobei der Leiter (7) ein zylindrischer Leiter (14) ist, der mit einem ersten Statorstabanschluss (13) des Generators gekoppelt ist, welches Verfahren die Schritte umfasst:
a) Bereitstellen einer tragbaren Vorrichtung (19), die mit einem Schleifwerkzeug versehen ist;
b) Lösen der Kopplung zwischen dem ersten Statorstabanschluss (13) und dem Leiter (14);
c) Koppeln der Schleifvorrichtung (19) mit dem Leiter (14), wobei der Leiter weiterhin mit dem Generator verbunden ist;
d) Schleifen der äußeren Endoberfläche des Leiters (14);
**dadurch gekennzeichnet, dass** das Verfahren ferner die Schritte enthält:
e) Ersetzen des ersten Statorstabanschlusses (13) durch einen zweiten Statorstabanschluss (15), der einen zylindrischen Sitz (18) hat, der dafür konfiguriert ist, mit dem geschliffenen Teil des Leiters (14) gekoppelt zu werden;
f) Koppeln des geschliffenen Leiters mit dem zylindrischen Sitz (18) des zweiten Statorstabanschlusses (15).

2. Verfahren nach Anspruch 1, wobei die existierende Kopplung zwischen dem Leiter (14) und dem ersten Statorstabanschluss (13) durch Hartlöten verwirklicht ist, wobei der Schritt b) durch induktive Erwärmung durchgeführt wird.

3. Verfahren nach Anspruch 1, wobei die Kopplung zwischen dem geschliffenen Leiter und dem zweiten Statorstabanschluss (15) durch Hartlöten verwirklicht wird.

4. Vorrichtung nach einem der vorhergehenden Ansprüche, wobei die tragbare Schleifvorrichtung (19) mit einem rotierenden Schleifwerkzeug versehen ist, wobei während Schritt d) der Leiter (14) fixiert ist und das Schleifwerkzeug um den Leiter rotiert.

5. Tragbare Vorrichtung (19) zum Reinigen der äußeren Endoberfläche eines Generatorleiters (14), insbesondere eines Turbogeneratorleiters, wobei die Vorrichtung eine Größe hat, die zur Verwendung zwischen den Statorbauteilen geeignet ist und umfasst:
- eine Handgriffanordnung (22), die dafür konfiguriert ist, von einer Bedienperson gehandhabt zu werden;
- ein Schleifwerkzeug, das dafür konfiguriert ist, um die äußere Endoberfläche des Leiters (14) zu rotieren, während der Leiter festgelegt ist;
wobei die Vorrichtung eine rotierende Schale (21) umfasst, die das Schleifwerkzeug trägt und dafür konfiguriert ist, das Leiterende (14) aufzunehmen;
wobei das Schleifwerkzeug umfasst:
- eine Vielzahl von Schleifelementen (23), die dafür konfiguriert sind, die äußere Oberfläche des Leiters (14) zu schleifen;
- Anpresselemente (24), die dafür konfiguriert sind, die Schleifelemente (23) gegen die äußere Oberfläche des Leiters (14) zu pressen;
**dadurch gekennzeichnet, dass** die Anpresselemente (24) in Fenstern (25) untergebracht sind, die in der Schale (21) vorgesehen sind, wobei jedes Anpresselement ein erstes Ende, das in dem Fenster scharnierartig aufgehängt ist, und ein freies Ende (26), das in das Innere der Schale (21) vorspringt, umfasst.

6. Vorrichtung nach Anspruch 5, wobei die Vorrichtung einen einstellbaren Pneumatikmotor (20) zum Antreiben des Schleifwerkzeugs umfasst.

7. Vorrichtung nach Anspruch 5, wobei das freie Ende der Anpresselemente (24) eine zylindrische Oberfläche umfasst, die der zylindrischen Oberfläche des Leiters entspricht.

8. Vorrichtung nach Anspruch 5 oder 7, wobei das Schleifwerkzeug eine Vielzahl von einstellbaren (27) Druckelementen umfasst, die dafür konfiguriert sind, die Anpresselemente (24) gegen die zylindrische Leiteroberfläche (14) zu drücken.

9. Vorrichtung nach Anspruch 8, wobei die einstellbaren Druckelemente in Form von Schrauben (27) verwirklicht sind, die durch die Schale (21) verlaufen und federnde Kugelköpfe (29) haben, die auf die Anpresselemente wirken.

10. Vorrichtung nach einem der vorhergehenden Ansprüche von 5 bis 9, wobei die Schleifelemente in Form von Schleifpapieren (23) verwirklicht sind, die durch lösbare Klemmplatten (30) in ihrer Position fixiert sind.

## Revendications

1. Procédé de nettoyage de la surface extérieure d'extrémité d'un conducteur de générateur (7), en particulier d'un conducteur de turbogénérateur, dans lequel le conducteur (7) est un conducteur cylindrique (14) couplé à un premier joint de barre de stator (13) du générateur ; le procédé comprenant les étapes consistant à :
a) fournir un dispositif portable (19) muni d'un outil de meulage ;
b) libérer l'accouplement entre le premier joint de barre de stator (13) et le conducteur (14) ;
c) coupler le dispositif de meulage (19) au conducteur (14), le conducteur étant toujours couplé au générateur ;
d) meuler la surface extérieure d'extrémité du conducteur (14) ; **caractérisé en ce que** le procédé comprend également les étapes consistant à :
e) remplacer le premier joint de barre de stator (13) par un second joint de barre de stator (15) doté d'un logement cylindrique (18) configuré pour être couplé avec la partie rectifiée du conducteur (14) ;
f) coupler le conducteur rectifié au siège cylindrique (18) du second joint de barre de stator (15).

2. Procédé selon la revendication 1, dans lequel le couplage existant entre le conducteur (14) et le premier joint de barre de stator (13) est réalisé par brasage ; l'étape b) est réalisée par chauffage par induction.

3. Procédé selon la revendication 1, dans lequel le couplage entre le conducteur rectifié et le second joint de barre de stator (15) est réalisé par brasage.

4. Procédé selon l'une quelconque des revendications précédentes, dans lequel le dispositif de meulage portable (19) est muni d'un outil de meulage rotatif ; pendant l'étape d), le conducteur (14) est fixé et l'outil de meulage tourne autour du conducteur.

5. Dispositif portable (19) pour nettoyer la surface extérieure d'extrémité d'un conducteur de générateur (14), en particulier un conducteur de turbogénérateur, le dispositif présentant une taille appropriée pour être utilisé entre les composants du stator et comprenant :
- un ensemble de poignée (22) configuré pour être manoeuvré par un utilisateur ;
- un outil de meulage configuré pour tourner autour de la surface extérieure d'extrémité du conducteur (14) alors que le conducteur est fixé ;
dans lequel le dispositif comprend un bol rotatif (21) supportant l'outil de meulage et configuré pour loger l'extrémité du conducteur (14) ;
dans lequel l'outil de meulage comprend :
- une pluralité d'éléments abrasifs (23) configurés pour meuler la surface extérieure du conducteur (14) ;
- des éléments de pression (24) configurés pour presser les éléments abrasifs (23) contre la surface extérieure du conducteur (14) ;
**caractérisé en ce que** les éléments de pression (24) sont abrités dans des fenêtres (25) obtenues dans le bol (21), chaque élément de pression comprend une première extrémité articulée dans la fenêtre et une extrémité libre (26) faisant saillie à l'intérieur du bol (21).

6. Dispositif selon la revendication 5, dans lequel le dispositif comprend un moteur pneumatique réglable (20) pour entraîner l'outil de meulage.

7. Dispositif selon la revendication 5, dans lequel l'extrémité libre des éléments de pression (24) comprend une surface cylindrique correspondant à la surface cylindrique du conducteur.

8. Dispositif selon la revendication 5 ou 7, dans lequel l'outil de meulage comprend une pluralité d'éléments de poussée de réglage (27) configurés pour pousser les éléments de pression (24) contre la surface cylindrique conductrice (14).

9. Dispositif selon la revendication 8, dans lequel chaque élément de poussée de réglage est réalisé sous forme de vis (27) traversant le bol (21) et doté de têtes sphériques élastiques (29) agissant contre les éléments de pression.

10. Dispositif selon l'une quelconque des revendications précédentes de 5 à 9, dans lequel les éléments abrasifs sont réalisés sous la forme de papiers abrasifs (23) fixés en position par des plaques de blocage amovibles (30).
